# EUROPÄISCHE PATENTSCHRIFT

(11) **EP 0 740 102 B1**
(45) Veröffentlichungstag und Bekanntmachung des Hinweises auf die Patenterteilung: **16.08.2001**
(21) Anmeldenummer: 96890065.4
(22) Anmeldetag: 04.04.1996
(51) Int. Cl.: F16L 55/16, F16L 55/162, F16L 55/165, F16L 55/26, E03F 3/06

(54) **Verfahren zum Sanieren der undichten Wände von Leitungen**
Method for renovating leaking pipe walls
Méthode pour la rénovation des parois non-étanches de canalisations

(30) Priorität: 07.04.1995 AT 62395
(43) Veröffentlichungstag der Anmeldung: 30.10.1996
(73) Patentinhaber: Kübel, Johann, 3072 Kasten (AT)
(72) Erfinder: Kübel, Johann, 3072 Kasten (AT)
(74) Vertreter: Brauneiss, Leo, Dipl.Ing.

(56) Entgegenhaltungen:
- EP-A- 0 564 741
- WO-A-92/17728
- WO-A-94/13998
- DE-A- 3 929 558

## Beschreibung

Die Erfindung betrifft ein Verfahren zum Sanieren der undichten Wände von Leitungen, wie Rohren, Kanälen od.dgl., insbesondere von Abzweigleitungen im Bereich der Mündung in Hauptleitungen.

Vor allem bei Kanälen treten an jenen Stellen, wo zu den Grundstücken führende Abzweigleitungen in den Hauptkanal bzw. Sammelkanal münden, häufig undichte Stellen, insbesondere Spalte und Risse, auf, durch die einerseits das im Kanal befindliche Abwasser austritt, wodurch es zu einer Verunreinigung des Grundwassers kommt, durch die andererseits aber auch Grundwasser in den Kanal eintreten kann, wodurch die vom Kanal abzuführende Wassermenge in unerwünschter Weise erhöht wird. Es ist daher erforderlich, diese undichten Stellen zu sanieren. Um Grabungsarbeiten zu vermeiden, werden solche Sanierungsarbeiten mittels sogenannter Kanalroboter vorgenommen. Es sind dies im Haupt- bzw. Sammelkanal verfahrbare Geräte, die mit wenigstens einem motorisch bewegbaren Arm versehen sind, an dem verschiedene Bearbeitungsgeräte befestigt werden können. Die Fortbewegung des Gerätes und die Bewegung des Armes sind von der Oberfläche steuerbar und können durch eine am Gerät befestigte Videokamera überwacht werden.

Um nun in der Kanalwand auftretende Spalte oder Risse zu sanieren, ist es bereits bekannt, diese Hohlräume mit einem Epoxyharz auszufüllen, das mittels einer am Arm des Kanalroboters befestigten Spachtel in die Spalte und Risse hineingedrückt wird. Nachteilig ist bei diesem bekannten Verfahren, dass man bei der Sanierung von Abzweigleitungen mittels der am Arm des Kanalroboters befestigten Spachtel nur etwa einen Bereich von 50 mm von der Mündung der Abzweigleitung ausgehend in dieser Abzweigleitung sanieren kann. Die Spalte und Risse sind aber häufig zumindest teilweise etwa 100 mm von der Mündungsöffnung entfernt. Ein ganz wesentlicher Nachteil bei diesem bekannten Verfahren und auch bei anderen bekannten Verfahren ist es weiters, dass bei Verwendung von Epoxyharz eine gute mechanische Verbindung desselben mit der zu sanierenden Leitung erfolgt, die Aushärtung des Epoxyharzes jedoch mehrere Stunden dauert und während dieser Zeit die Leitung unbenützbar ist.

Bei einem weiteren bekannten Verfahren zur Sanierung von Kanalabzweigungen wird über die Mündung der Abzweigung in diese Epoxyharz eingespritzt, bis dass die ganze Mündungsöffnung verschlossen ist. Nach dem Aushärten des Epoxyharzes wird das überschüssige Epoxyharz weggefräst, um die Mündungsöffnung freizulegen. Auch hier ist die lange Aushärtezeit des Epoxyharzes nachteilig. Außerdem ist der Materialverbrauch groß und das nachträgliche Ausfräsen erfordert einen zusätzlichen Arbeitsaufwand.

Weiters wurde bereits vorgeschlagen, mittels des Kanalroboters eine aufblasbare Schlauchtülle im Bereich der Kanalabzweigung in dieser zu positionieren. Innerhalb dieser aufblasbaren Schlauchtülle befindet sich eine ein Epoxyharz enthaltende Auspreßkartusche. Durch diese wird mittels Druckluft das Epoxyharz über Bohrungen in der Schlauchtülle auf die zu sanierende Kanalinnenwand aufgespritzt. Das unter einem Druck von 1 bis 2 bar austretende Epoxyharz gewährleistet kein vollständiges Ausfüllen der Spalte und Risse, sodass die Gefahr besteht, dass die Sanierungsarbeiten nicht von langer Dauer sind. Außerdem benötigt auch bei diesem bekannten Verfahren das Epoxyharz eine stundenlange Aushärtezeit, während welcher die Kanalabzweigung unbenützbar ist.

Bei einem anderen bekannten Verfahren wird im Bereich eines zu sanierenden Kanalabschnittes ein schlauchförmiges, mit einem durch Einwirken einer Wärmestrahlung aushärtenden Polymerharz getränktes Laminat unter Druckeinwirkung aufgebracht und in der Folge durch Einwirken einer UV-Strahlung aushärten gelassen. Die Aushärtung erfolgt hiebei innerhalb von Minuten, wobei sich das Laminat an die Oberflächenform der zu sanierenden Wandstellen anpasst und nach seiner Versteifung zwar eng an dieser Oberfläche anliegt, sich jedoch nicht fest mit den zu sanierenden Wandteilen verbindet. Es besteht daher die Gefahr, dass in den Randbereichen des aufgebrachten Laminates zwischen diesem und den benachbarten Wandteilen ein Flüssigkeitseintritt erfolgt und die eintretende Flüssigkeit über die schadhaften Stellen in den Wandteilen entweicht, vor allem, wenn durch mit der Flüssigkeit mitgeführte Feststoffe die Randbereiche des aufgebrachten Laminates mechanisch beschädigt werden. Hiebei kommt hinzu, dass nach dem Aushärten des Laminates innerhalb der nächsten Stunden noch eine geringfügige Schrumpfung desselben eintritt, durch welche ein enges Anliegen des Laminates an den Wandteilen wieder aufgehoben wird.

Aus der EP-A-564 741 ist ein Verfahren zum Sanieren von unterirdisch verlegten Leitungen, insbesondere von Kanalleitungen, bekannt geworden, bei welchem die undichte Stelle mit einem schlauchförmigen Material ausgekleidet wird, das mit einem durch Einwirkung einer UV-Strahlung aushärtbaren Harz getränkt ist. An den beiden Endbereichen dieser schlauchförmigen Auskleidung ist eine Dichtung vorgesehen, deren Wirkung dadurch verbessert werden soll, dass sich ihr Volumen durch Wasseraufnahme vergrößert. Da diese Dichtung keine Verklebung zwischen der schlauchförmigen Auskleidung und der Innenwand der Rohrleitung bewirkt, kann ein Eintritt von Flüssigkeit zwischen der schlauchförmigen Auskleidung und der Innenwand der Rohrleitung nicht mit Sicherheit vermieden werden.

Die vorliegende Erfindung hat sich zur Aufgabe gestellt, diesen Nachteil zu vermeiden und ein Verfahren zu schaffen, bei dessen Anwendung ein Flüssigkeitseintritt in den Randbereichen des Laminates zwischen diesem und den benachbarten Wandteilen mit Sicherheit vermieden wird. Zur Lösung dieser Aufgabe schlägt die Erfindung, ausgehend von einem bekannten Verfahren, bei welchem auf die zu sanierenden Innenwandteile ein mit Polyesterharz getränktes Laminat, vorzugsweise unter Druckeinwirkung, aufgebracht und durch Einwirken einer Wärmestrahlung, insbesondere einer UV-Strahlung, aushärten gelassen wird, vor, dass vor dem Aufbringen des Laminates auf die an den zu sanierenden Innenwandteilen anliegenden Randbereiche des Laminates ein Epoyharz aufgetragen wird, welches eine feste Verbindung zwischen diesen Randbereichen des Laminates und der Leitungsinnenwand sicherstellt. Dieses Epoxyharz hat zwar eine längere Aushärtezeit als das Polyesterharz, welches durch Einwirken einer Wärmestrahlung innerhalb von Minuten aushärtet, jedoch wird dadurch die rasche Benützbarkeit der zu sanierenden Stellen nicht in Frage gestellt. Durch das rasche Aushärten des Polyesterharzes versteift sich das mit diesem Polyesterharz getränkte Laminat rasch und liegt dann eng an den zu sanierenden Wandteilen an, es können somit während des Aushärtens des Epoxyharzes nur geringfügige Mengen Flüssigkeit in den Zwischenraum zwischen dem versteiften Laminat und den zu sanierenden Wandteilen eintreten.

Nach dem Aushärten des Epoxyharzes wird außerdem eine sehr gute mechanische Verbindung zwischen dem Laminat und den zu sanierenden Wandteilen gewährleistet, wodurch sichergestellt ist, dass auch bei einer starken Strömung und bei einem Vorhandensein größerer von der Flüssigkeit mitgeführter Feststoffe das Laminat nicht losgerissen wird.

Gemäß einem weiteren Verfahrensschritt werden vorzugsweise vor dem Aufbringen des Laminates auf die zu sanierenden Innenwandteile diese, insbesondere mittels rotierender Bürsten, gereinigt und/oder aufgeraut. Die Bürsten weisen zweckmäßig Borsten aus Kunststoff auf, wobei an den freien Borstenenden Korundschleifkörper angeklebt sind. Dadurch erfolgt eine mechanische Behandlung der zu sanierenden Innenwandteile, wodurch die Oberfläche dieser Innenwandteile fettfrei gemacht wird und eine gute Klebewirkung, insbesondere an jenen Stellen, wo das Epoxyharz aufgetragen ist, sichergestellt ist.

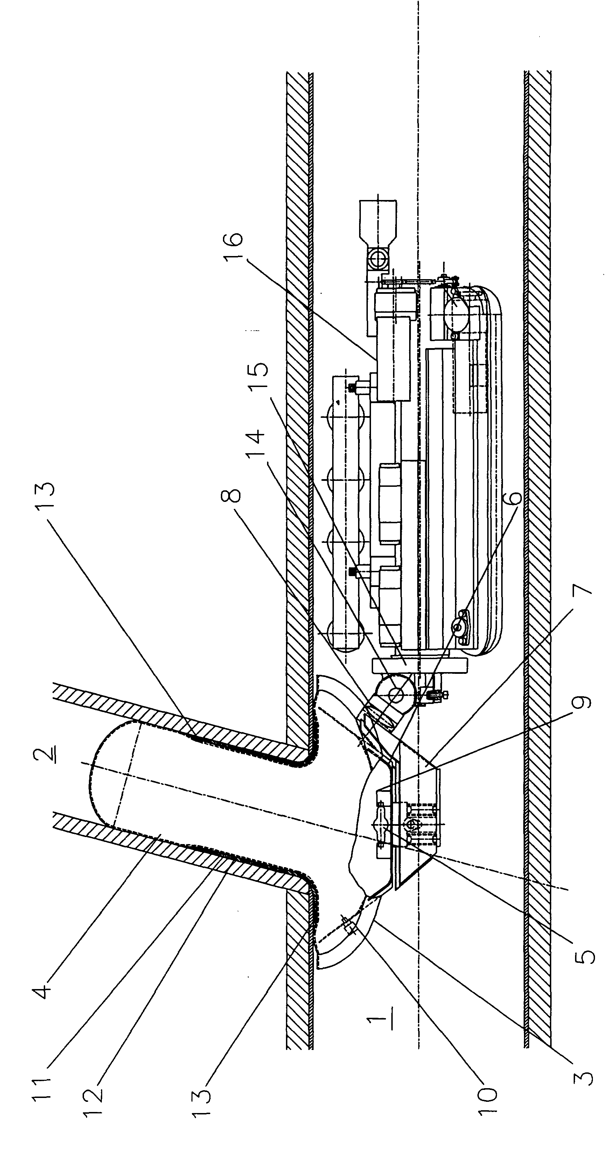

In der Zeichnung ist eine Vorrichtung zur Durchführung des erfindungsgemäßen Verfahrens im Schnitt dargestellt, wobei sich die Vorrichtung in einer Stellung befindet, in der eine Kanalabzweigung eines schematisch angedeuteten Hauptkanales saniert wird.

In einen schematisch dargestellten Hauptkanal 1 mündet eine Kanalabzweigung 2 ein, wobei sich im Bereich der Einmündung nicht dargestellte sanierungsbedürftige Spalte, Risse od.dgl. befinden.

Die zur Sanierung dieser undichten Stellen dienende Vorrichtung weist einen starren Rahmen 3 auf, an dem sich ein aus einem UV-strahlendurchlässigen Silikongummi bestehender Druckkörper 4 abstützt. Im Inneren des Druckkörpers befinden sich ein UV-Strahler 5 sowie ein Reflektor bzw. mehrere Reflektoren 6, die die UV-Strahlung in die gewünschte Richtung reflektieren.

Der Rahmen 3 ist über eine lediglich schematisch dargestellte Halteeinrichtung 7 mit einem Arm 8 verbunden, welcher über ein schematisch angedeutetes Kardangelenk 14 mit einer Platte 15 verbunden ist, die in einem gleichfalls lediglich schematisch angedeuteten, im Hauptkanal 1 verfahrbaren, Kanalroboter 16 drehbar gelagert ist. Durch diese Anordnung bzw. Lagerung wird eine allseits drehbare und nach allen Richtungen schwenkbare Bewegung des Rahmens 3 ermöglicht und dadurch sichergestellt, daß auch bei engen Kanalquerschnitten mit dem Druckkörper 4 weit in die Kanalabzweigung 2 hineingefahren und dadurch auch in einem größeren Abstand von der Mündung dieser Abzweigleitung 2 in den Hauptkanal 1 befindliche Spalte und Risse saniert werden können. Die Verdrehung und Verschwenkung erfolgt hiebei ferngesteuert und kann durch eine am Kanalroboter 16 angeordnete Fernsehkamera überwacht werden. Vom Kanalroboter 16 erfolgt auch über einen elektrischen Anschluß 9 die Anspeisung des UV-Strahlers 5 und über einen Anschlußstutzen 10 eine Druckluftzufuhr in das Innere des aufweitbaren Druckkörpers 4.

Dieser weist an seiner Außenseite eine Stützfläche 11 für ein schlauchförmig ausgebildetes Laminat 12 auf. Dieses besteht aus einem mit Polyesterharz getränkten Glasfaservlies. Das Polyesterharz wird nach dem Tränken des Glasfaservlieses durch UV-Strahlen derart vorverfestigt, daß das Laminat zäh, aber noch dehnbar und elastisch ist. Zweckmäßig erfolgt die Vorverfestigung bereits im Herstellerbetrieb des Laminates, das Laminat wird also bereits vorverfestigt an die Baustelle geliefert, wo es in diesem Zustand auf der Stützfläche 11 angebracht wird. Nach dem Anbringen des Laminates 12 wird in dessen Randbereichen ein Epoxyharz 13 aufgetragen und im Anschluß daran die erfindungsgemäße Vorrichtung mittels des Kanalroboters 16 ferngesteuert in die erforderliche Lage gebracht und der Druckkörper 4 durch Druckluftzufuhr aufgeblasen, so daß er die in der Zeichnung dargestellte Form besitzt. Durch Zufuhr elektrischer Energie über den Anschluß 9 wird der UV-Strahler 5 aktiviert, die ausgesandte Strahlung durchdringt die Wand des Druckkörpers 4 und verfestigt in kürzester Zeit das Polyesterharz, wodurch das Laminat, das sich an die Form der Kanalwand angepaßt hat, steif wird und eng an dieser Kanalwand anliegt, sich jedoch nicht mit der Kanalwand verbindet, so daß eine Relativbewegung zwischen der Kanalwand und dem Laminat möglich ist, wie sie beispielsweise bei einer Muffenverbindung stattfindet. Durch das langsamer aushärtende, jedoch eine Verbindung zwischen dem Laminat und der Kanalwand herstellende Epoxyharz 13 wird eine Abdichtung der Randbereiche des steifen Laminates hergestellt und ein Eindringen von Flüssigkeit zwischen dem Rand des Laminates und der zu sanierenden Wandteile verhindert. Die Benützung der Kanalabzweigung 2 kann unmittelbar nach der Verfestigung des Polyesterharzes erfolgen, sobald die erfindungsgemäße Vorrichtung aus dem Bereich der Kanalabzweigung entfernt worden ist.
Ein derartiger Silikongummi besteht aus einem vinylgruppenhaltigen Polydimethylsiloxan, Kieselsäure, Peroxiden sowie gegebenfalls Pigmenten und Additiven und ist in Äthylalkohol, Aceton und Wasser praktisch unlöslich.

## Patentansprüche

1. Verfahren zum Sanieren der undichten Wände von Leitungen, wie Rohren, Kanälen od.dgl., insbesondere von Abzweigleitungen im Bereich der Mündung in Hauptleitungen, wobei auf die zu sanierenden Innenwandteile ein mit einem Polyesterharz getränktes Laminat (12), vorzugsweise unter Druckeinwirkung, aufgebracht und durch Einwirken einer Wärmestrahlung, insbesondere einer UV-Strahlung, aushärten gelassen wird, dadurch gekennzeichnet, daß vor dem Aufbringen des Laminates (12) auf die an den zu sanierenden Innenwandteilen anliegenden Randbereiche des Laminates ein Epoxyharz (13) aufgetragen wird.

2. Verfahren nach Anspruch 1, dadurch gekennzeichnet, daß vor dem Aufbringen des Laminates (12) auf die zu sanierenden Innenwandteile diese, insbesondere mittels rotierender Bürsten, gereinigt und/oder aufgerauht werden.

## Claims

1. Method for renovating leaking walls of conduits, such as tubes, channels or the like, particularly of branch conduits in the region of the orifice into main conduits, wherein a laminate (12) impregnated with a polyester resin is applied to the inner wall portions to be renovated, preferably under pressure, and is hardened by the action of heat radiation, particularly UV-radiation, characterised in that before applying the laminate (12) an epoxy resin (13) is applied to the marginal regions of the laminate which engage the inner wall portions to be renovated.

2. Method according to claim 1, characterised in that before applying the laminate (12) to the inner wall portions to be renovated, they are cleaned and/or roughened, particularly by means of rotating brushes.

## Revendications

1. Méthode de rénovation des parois non-étanches de canalisations, telles que des conduites, égouts ou similaires, en particulier d'embranchements au niveau de l'embouchure dans les canalisations principales, dans laquelle un stratifié 12 imprégné de résine polyester est appliqué, de préférence plaqué, sur les régions de la paroi interne devant être rénovées et durci sous l'effet d'un rayonnement thermique, en particulier un rayonnement UV, caractérisée en ce qu'une résine Epoxy (13) est appliquée sur les bords du stratifié en contact avec les régions de la paroi interne à rénover avant l'application du stratifié (12).

2. Méthode selon la revendication 1, caractérisée en ce que les régions de la paroi interne devant être rénovées doivent être nettoyées et/ou rendues rugueuses, en particulier au moyen de brosses rotatives, avant application du stratifié (12).
